# EUROPÄISCHE PATENTSCHRIFT

(11) **EP 3 627 065 B1**
(45) Veröffentlichungstag und Bekanntmachung des Hinweises auf die Patenterteilung: **16.08.2023**
(21) Anmeldenummer: 19198628.0
(22) Anmeldetag: 20.09.2019
(51) Int. Cl.: F24F 1/02, F24F 11/89, F24F 13/20, F24F 13/32, F24H 3/04

(54) **MODULARES RAUMLUFT-BEHANDLUNGSSYSTEM**
MODULAR AMBIENT AIR TREATMENT SYSTEM
SYSTÈME DE TRAITEMENT DE L'AIR AMBIANT MODULAIRE

(30) Priorität: 21.09.2018 DE 102018123327; 31.01.2019 DE 202019100593 U
(43) Veröffentlichungstag der Anmeldung: 25.03.2020
(73) Patentinhaber: Uhlik, Christian, 84036 Kumhausen (DE)
(72) Erfinder: Uhlik, Christian, 84036 Kumhausen (DE)
(74) Vertreter: Winter, Brandl - Partnerschaft mbB

(56) Entgegenhaltungen:
- EP-A2- 2 226 578
- DE-A1-102006 004 104
- DE-U1-202007 018 397
- US-A1- 2015 267 931
- US-B1- 6 240 742

## Beschreibung

### Technisches Gebiet

Die vorliegende Offenbarung betrifft ein Raumluft-Behandlungssystem zur Verbesserung der Raumluftqualität in geschlossenen und offenen Räumen.

Im Allgemeinen kann die Qualität der Raumluft basierend auf den Umgebungsparametern Temperatur und Feuchte sowie anhand der Feinstaub- und Geruchsbelastung beurteilt werden. Zur Verbesserung der Umgebungsparameter werden üblicherweise Klimageräte mit integrierter Befeuchtungsfunktionalität verwendet. Um die Feinstaub- und die Geruchsbelastung zu minimieren, kommen wiederum Filteranlagen, welche unterschiedliche Arten an Filtern beinhalten, zum Einsatz. Ein Problem bei konventionellen Raumluft-Behandlungsgeräten sind die beschränkten Möglichkeiten zur Steigerung der Behandlungskapazität des Systems für unterschiedliche Raumgrößen.

In CN 1752617 A ist daher ein Luftfilter mit modularem Aufbau offenbart, bei welchem baugleiche Luftfiltereinheiten im Betrieb übereinander angeordnet werden können, um so einfach die Behandlungskapazität über die Anzahl der verwendeten Luftfiltereinheiten an die Raumgröße anpassen zu können. Jedoch kann bei diesem System die Raumluft lediglich gefiltert werden und das System bietet keine Funktionalität zur Temperaturanpassung oder Befeuchtung.

Eine Kombination von Klimageräten und Filteranlagen in einem System ist in EP 2 476 968 B1 offenbart. Dabei wird eine Vielzahl an Luftbehandlungseinheiten zusammen in einer Luftbehandlungsvorrichtung verwendet, wobei die einzelnen Luftbehandlungseinheiten jeweils zumindest ein Bauteil zur Luftreinigung oder Luftfilterung, Erwärmung, Entfeuchtung, Befeuchtung und Luftkühlung umfassen und über Verbindungsbauteile, insbesondere einen Sender und einen Empfänger miteinander verbunden sind. Die zusätzliche Installation des Senders sowie des Empfängers führt zu einem Anstieg der Systemkomplexität aufgrund der steigenden Komponentenzahl und somit zu einem Anstieg der Herstellungskosten.

Weiter offenbart DE 20 2007 018397 U1 eine thermoelektrische Temperiervorrichtung mit mehreren thermoelektrisch arbeitenden Temperierelementen mit einer sich bei Zuführung elektrischen Stroms bildenden kalten Fläche auf ihrer einen Seite und einer warmen Fläche auf ihrer gegenüberliegenden Seite, mit auf beiden Seiten aufgebrachten, in einer jeweiligen Luftströmungskammer untergebrachten Luft-Wärmetauscherkörpern und mit Lüftern, welche eine Luftströmung entlang den Wärmetauscherkörpern bewirken.

Aufgabe der vorliegenden Erfindung ist es daher, ein modulares Raumluft-Behandlungssystem bereitzustellen, welches ein Überwinden der vorstehend dargelegten Nachteile bei gleichzeitiger Verbesserung der Raumluftqualität ermöglicht.

Gelöst wird die vorstehende Aufgabe durch das Raumluft-Behandlungssystem nach Anspruch 1.

Dabei beinhaltet das Raumluft-Behandlungssystem gemäß der vorliegenden Erfindung ein Basismodul, das eine erste Luftbehandlungseinheit und eine Steuereinrichtung zur Ansteuerung der ersten Luftbehandlungseinheit aufweist. Erfindungsgemäß sind zudem zumindest eine, insbesondere würfelförmige, zweite Luftbehandlungseinheit sowie Kopplungselemente zur Kopplung des Basismoduls, insbesondere der ersten Luftbehandlungseinheit, mit der zumindest einen zweiten Luftbehandlungseinheit vorgesehen, wobei die Steuereinrichtung sowohl die erste Luftbehandlungseinheit als auch die zumindest eine zweite Luftbehandlungseinheit ansteuert, und die Kopplungselemente symmetrisch ausgeführt sind, um die einzelnen Luftbehandlungseinheiten, wenn diese übereinander angeordnet sind, um ihre Längsachse gedreht zueinander anordnen zu können und die Ausrichtung der einzelnen Luftbehandlungseinheiten variieren zu können. Aufgrund des modularen Aufbaus und der Möglichkeit zur Steuerung der ersten Luftbehandlungseinheit und der zumindest einen zweiten Luftbehandlungseinheit über die Steuereinrichtung des Basismoduls kann auf eine zusätzliche Steuereinrichtung für jede zweite Luftbehandlungseinheit verzichtet werden bzw. eine solche eingespart werden, was den Anstieg der Teileanzahl und der Systemkomplexität verhindert.

Des Weiteren kann die Steuereinrichtung die zumindest eine zweite Luftbehandlungseinheit mittelbar über die erste Luftbehandlungseinheit ansteuern. Die Steuereinrichtung zur gemeinsamen Steuerung der ersten Luftbehandlungseinheit und der zumindest einen zweiten Luftbehandlungseinheit verhindert auch hier den Anstieg der Teileanzahl sowie der Systemkomplexität und der Herstellungskosten.

In einem weiteren Ausführungsbeispiel kann eine Behandlungskapazität des Raumluft-Behandlungssystems über eine Anzahl der zweiten Luftbehandlungseinheiten einstellbar sein. Der modulare Aufbau des Raumluft-Behandlungssystems gemäß der vorliegenden Offenbarung ermöglicht dabei ein einfaches Anpassen der Behandlungskapazität an unterschiedliche Raumgrößen oder Raumgeometrien. Zur Erhöhung der Behandlungskapazität muss dafür lediglich die Anzahl der zweiten Luftbehandlungseinheiten erhöht werden. Somit kann eine zusätzliche Erhöhung der Systemkomplexität und der Teileanzahl vermieden werden, da die Anpassung der Behandlungskapazität nicht über die Drehzahl eines Lüfterrads durchgeführt werden muss und daher in der ersten Luftbehandlungseinheit und der zumindest einen zweiten Luftbehandlungseinheit keine zusätzlichen Schrittmotoren zur Anpassung der Drehzahl des Lüfterrads vorgesehen werden müssen.

Alternativ kann die Behandlungskapazität des erfindungsgemäßen Raumluft-Behandlungssystems jedoch auch über eine Gebläseleistung der ersten Luftbehandlungseinheit und der zumindest einen Luftbehandlungseinheit einstellbar sein. In einem ersten Betriebsmodus kann die Gebläseleistung dabei direkt durch einen Benutzer über eine mit der Steuereinrichtung (mechanisch, elektrisch oder auf eine andere Weise) verbundene Schnittstelleneinheit eingestellt werden. In einem zweiten Betriebsmodus kann die Gebläseleistung basierend auf einem Abgleich eines über die Schnittstelleneinheit eingegebenen Sollwerts eines Raumluftparameters und eines über einen Sensor ermittelten Istwerts des Raumluftparameters durch die Steuereinrichtung eingestellt werden. Wenn das Raumluft-Behandlungssystem die Möglichkeit bietet, die Behandlungskapazität über die Gebläseleistung der Luftbehandlungseinheiten einzustellen, kann auch bei sehr kleinen Raumgrößen die Behandlungskapazität genau eingestellt werden.

Das erfindungsgemäße Raumluft-Behandlungssystem kann des Weiteren so eingerichtet sein, dass die erste Luftbehandlungseinheit und die zumindest eine zweite Luftbehandlungseinheit zumindest eine Komponente zur Filterung, Kühlung oder Befeuchtung der Umgebungsluft beinhalten. Durch die Ausstattung der ersten Luftbehandlungseinheit und der zumindest einen zweiten Luftbehandlungseinheit kann eine Verbesserung der Raumluftqualität bei verschiedenen Anforderungen, wie z.B. zu trockene Luft, zu warme Luft oder dergleichen, angemessen gewährleistet werden.

Bei dem erfindungsgemäßen Raumluft-Behandlungssystem kann die Steuereinrichtung in die erste Luftbehandlungseinheit integriert sein. Wird die Steuereinrichtung in die erste Luftbehandlungseinheit integriert, muss kein zusätzlicher mechanischer Kopplungsmechanismus zwischen der ersten Luftbehandlungseinheit und der Steuereinrichtung vorgesehen werden und die Teileanzahl, und damit einhergehend, die Systemkomplexität sowie die Herstellungskosten können reduziert werden.

Ferner kann die Steuereinrichtung in eine mit der ersten Luftbehandlungseinheit und/oder zweiten Luftbehandlungseinheit koppelbaren separaten Steuereinheit integriert sein. Dabei ist es denkbar, dass die separate Steuereinheit als Sockeleinheit ausgebildet ist, so dass diese gleichzeitig als Standfuß für ein erfindungsgemäßes Raumluft-Behandlungssystem dient. Alternativ ist es jedoch auch denkbar, die separate Steuereinheit in eine Deckeleinheit, welche auf einer Oberseite der zumindest einen zweiten Luftbehandlungseinheit angeordnet werden kann, zu integrieren. Selbstverständlich kann die separate Steuereinheit auch zwischen der ersten und der zweiten Luftbehandlungseinheit oder zwischen zwei zweiten Luftbehandlungseinheiten angeordnet und mit diesen gekoppelt werden. Wenn die Steuereinrichtung in diese mit der ersten und/oder zweiten Luftbehandlungseinheit koppelbare Steuereinheit ausgelagert wird, können die erste Luftbehandlungseinheit und die zumindest eine zweite Luftbehandlungseinheit baugleich und austauschbar konzipiert werden, wodurch ein Anstieg der Systemkomplexität verhindert werden kann.

Kopplungselemente zur (mechanischen und/oder elektrischen) Kopplung der ersten Luftbehandlungseinheit mit der zumindest einen zweiten Luftbehandlungseinheit und Kopplungselemente zur (mechanischen und/oder elektrischen) Kopplung einer zweiten Luftbehandlungseinheit mit einer weiteren zweiten Luftbehandlungseinheit sowie Kopplungselemente zur (mechanischen und/oder elektrischen) Kopplung der ersten Luftbehandlungseinheit mit der Sockeleinheit sind erfindungsgemäß symmetrisch ausgeführt.

Eine Ausrichtung einzelner Luftbehandlungseinheiten kann dadurch in einem gekoppelten Zustand variiert werden, was eine bessere Verteilung der behandelten Umgebungsluft im Raum ermöglicht.

Des Weiteren kann das erfindungsgemäße Raumluft-Behandlungssystem mit einer Energieversorgungseinheit, welche mit dem Basismodul, der ersten Luftbehandlungseinheit und/oder der zumindest einen zweiten Luftbehandlungseinheit zur Energieversorgung einzelner oder aller Einheiten des Raumluft-Behandlungssystem koppelbar ist, ausgestattet sein. Dabei kann die Energieversorgungseinheit an zumindest einer ihrer Außenflächenseiten Solarzellen aufweisen. Die erfindungsgemäße Entkopplung der Luftbehandlungseinheit und der Energieversorgungseinheit ermöglicht dabei eine weitere Reduktion der Teileanzahl der Luftbehandlungseinheiten und somit eine weitere Reduktion der Systemkomplexität sowie der Herstellungskosten.

### Kurzbeschreibung der Figuren

Fig. 1 ist eine Darstellung eines Aufbaus eines Raumluft-Behandlungssystems nach einem ersten Ausführungsbeispiel.
Fig. 2 ist eine Darstellung eines Aufbaus des Raumluft-Behandlungssystems nach einem modifizierten ersten Ausführungsbeispiel.
Fig. 3 ist eine Darstellung eines Aufbaus des Raumluft-Behandlungssystems nach einem modifizierten ersten Ausführungsbeispiel.
Fig. 4 ist eine beispielhafte Darstellung eines Aufbaus einer in den nachstehend beschriebenen Ausführungsbeispielen verwendeten Luftbehandlungseinheit.
Fig. 5A und Fig. 5B sind perspektivische Ansichten einer in den nachstehend beschriebenen Ausführungsbeispielen verwendeten, beispielhaften Luftbehandlungseinheit.
Fig. 6 ist eine Explosionszeichnung des in den nachstehend beschriebenen Ausführungsbeispielen verwendeten, beispielhaften Raumluft-Behandlungssystems.
Fig. 7A und Fig. 7B sind perspektivische Ansichten eines in den nachstehend beschriebenen Ausführungsbeispielen verwendeten, beispielhaften Raumluft-Behandlungssystems mit einem Basismodul und einer zweiten Luftbehandlungseinheit.
Fig. 8 ist eine schematische Darstellung eines Raumluft-Behandlungssystems nach einem zweiten Ausführungsbeispiel.

### Beschreibung der Ausführungsbeispiele

Nachstehend werden Ausführungsbeispiele der vorliegenden Offenbarung auf Basis der zugehörigen Figuren beschrieben.

### Erstes Ausführungsbeispiel

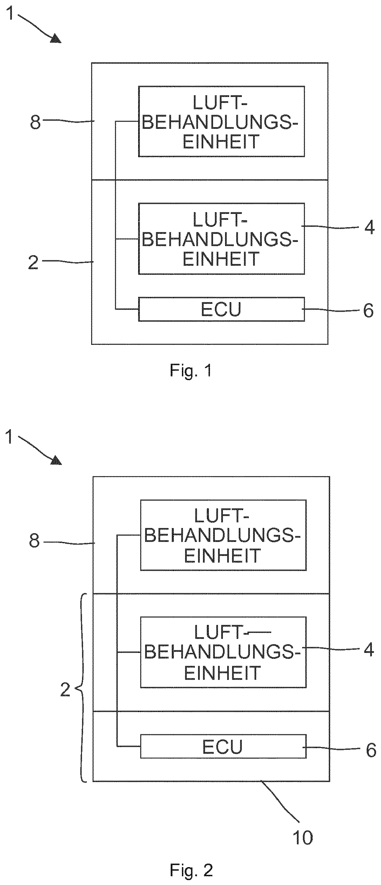

Fig. 1 ist eine Darstellung eines Aufbaus eines Raumluft-Behandlungssystems 1 nach einem ersten Ausführungsbeispiel. Das Raumluft-Behandlungssystem 1 weist dabei ein Basismodul 2 mit einer ersten Luftbehandlungseinheit 4 und einer Steuereinrichtung 6 zur Steuerung der ersten Luftbehandlungseinheit 4 auf. Neben dem Basismodul 2 weist das Raumluft-Behandlungssystem 1 gemäß dem ersten Ausführungsbeispiel zumindest eine zweite Luftbehandlungseinheit 8 auf. Vorzugsweise können mehrere zweite Luftbehandlungseinheiten 8 übereinander gesetzt werden.

In dem Raumluft-Behandlungssystem 1 gemäß dem ersten Ausführungsbeispiel ist die Steuereinrichtung 6 des Basismoduls 2 eingerichtet, sowohl die erste Luftbehandlungseinheit 4 als auch die zumindest eine zweite Luftbehandlungseinheit 8 zu steuern. Die zumindest eine zweite Luftbehandlungseinheit 8 ist dabei mit der ersten Luftbehandlungseinheit 4 elektrisch (mechanisch und/oder elektrisch) koppelbar.

Des Weiteren kann in dem Raumluft-Behandlungssystem 1 gemäß dem ersten Ausführungsbeispiel die Steuereinrichtung 6 in die erste Luftbehandlungseinheit 4 integriert sein. Alternativ kann die Steuereinrichtung 6 auch in einer mit der ersten Luftbehandlungseinheit 4 koppelbaren separaten Steuereinheit, insbesondere einem Steuersockel 10, integriert sein. Fig. 2 stellt hierbei den Aufbau eines Raumluft-Behandlungssystems 1 nach einer Modifikation des ersten Ausführungsbeispiels dar, wenn die Steuereinrichtung 6 in den Steuersockel 10 integriert ist. Der Steuersockel 10 mit integrierter Steuereinrichtung 6 ist mit der ersten Luftbehandlungseinheit 4 (mechanisch und/oder elektrisch) koppelbar und die Steuereinrichtung 6 steuert die erste Luftbehandlungseinheit 4 und die zumindest eine zweite Luftbehandlungseinheit 8. Wenn die Steuereinrichtung 6 in den Steuersockel 10 integriert ist, können die ersten Luftbehandlungseinheit 4 und die zweite Luftbehandlungseinheit 8 baugleich ausgebildet sein.

In dem Raumluft-Behandlungssystem 1 gemäß dem ersten Ausführungsbeispiel kann eine Behandlungskapazität des Raumluft-Behandlungssystems 1 einfach über eine Anzahl der verwendeten zweiten Luftbehandlungseinheiten 8 (zusätzlich zu der ersten Luftbehandlungseinheit 4) gesteuert werden. Dabei steigt die Anzahl der verwendeten zweiten Luftbehandlungseinheiten 8 mit einer zunehmenden Größe des Raumes, in welchem das Raumluft-Behandlungssystem 1 zur Verbesserung der Raumluft verwendet wird.

Alternativ kann die Behandlungskapazität auch über eine Drehzahl eines Lüfterrads der ersten Luftbehandlungseinheit 4 und eine Drehzahl eines Lüfterrads der zumindest einen zweiten Luftbehandlungseinheit 8 gesteuert werden. In diesem Fall ist jeweils ein zusätzlicher Lüfterrad-Schrittmotor, welcher eine Soll-Drehzahl an dem Lüfterrad bereitstellt, an dem Lüfterrad der ersten Luftbehandlungseinheit 4 und an dem Lüfterrad der zumindest einen zweiten Luftbehandlungseinheit 8 montiert. Die Drehzahl des Lüfterrads der ersten Luftbehandlungseinheit 4 und die Drehzahl des Lüfterrads der zumindest einen zweiten Luftbehandlungseinheit 8 können dabei in einem ersten Betriebsmodus direkt durch einen Benutzer festgelegt werden oder in einem zweiten Betriebsmodus durch Abgleich eines durch einen in der ersten Luftbehandlungseinheit 4 und/oder in der zumindest einen zweiten Luftbehandlungseinheit 8 verbauten Umweltsensor erfassten Istwert des jeweiligen Raumluftparameters mit einem durch den Benutzer bestimmten Sollwert festgelegt werden. Die Steuereinrichtung 6 kann alle Luftbehandlungseinheiten 4 und 8 synchron oder individuell ansteuern.

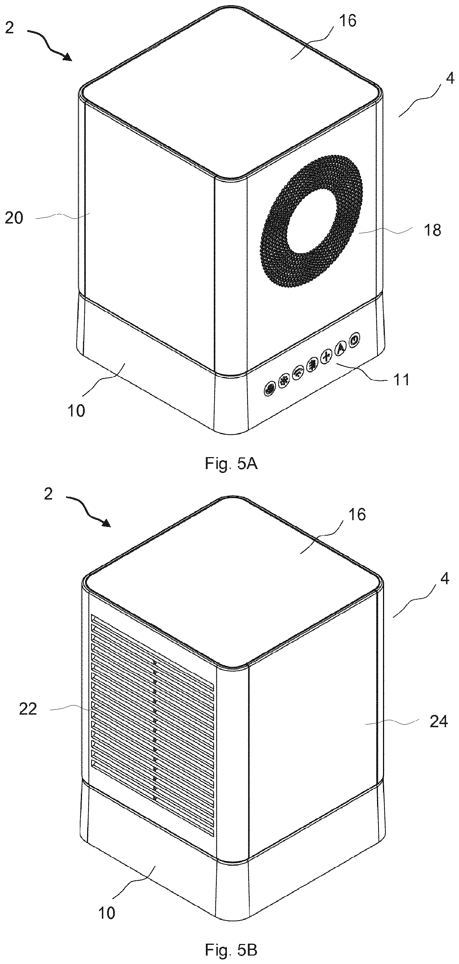

Zur Festlegung der Drehzahl des Lüfterrads der ersten Luftbehandlungseinheit 4 und/oder der Drehzahl des Lüfterrads der zumindest einen zweiten Luftbehandlungseinheit 8 kann in dem ersten Betriebsmodus eine Schnittstelleneinheit an der Steuereinrichtung 6 vorgesehen sein. Diese Schnittstelleneinheit kann beispielsweise mechanisch, elektrisch oder auf eine andere Weise ausgeführt werden. So kann z.B. die Drehzahl des Lüfterrads der ersten Luftbehandlungseinheit 4 und/oder die Drehzahl des Lüfterrads der zumindest einen zweiten Luftbehandlungseinheit 8 durch den Benutzer direkt über ein an der Steuereinrichtung 6 bzw. an dem Steuersockel 10 angebrachtes Potentiometer oder Bedienpanel 11 (siehe Fig. 5A) eingestellt werden. Alternativ kann die Schnittstelleneinheit auch mit einer weiteren externen Steuereinrichtung, über welche die Drehzahl des Lüfterrads der ersten Luftbehandlungseinheit 4 bzw. die Drehzahl der zumindest einen zweiten Luftbehandlungseinheit 8 festgelegt werden kann, in Verbindung stehen. Diese externe Steuereinrichtung kann beispielsweise ein mobiles Endgerät, wie z.B. ein Smartphone mit darauf installierter Applikation, sein und beispielsweise über eine Bluetooth-Verbindung mit der Steuereinrichtung 6 kommunizieren.

Analog dazu kann in dem zweiten Betriebsmodus der Sollwert zur Bestimmung der Drehzahl der ersten Luftbehandlungseinheit 4 bzw. der zumindest einen zweiten Luftbehandlungseinheit 8 auch über eine mechanische, elektrische oder auf eine andere Weise ausgeführte Schnittstelleneinheit festgelegt werden.

In dem Raumluft-Behandlungssystem 1 gemäß dem ersten Ausführungsbeispiel kann die Steuereinrichtung 6 der ersten Luftbehandlungseinheit 4, welche in der ersten Luftbehandlungseinheit 4 oder in dem Steuersockel 10 integriert sein kann, die zumindest eine zweite Luftbehandlungseinheit 8 unmittelbar steuern. Alternativ dazu kann die zumindest eine zweite Luftbehandlungseinheit 8 auch mittelbar über die erste Luftbehandlungseinheit 4 gesteuert werden.

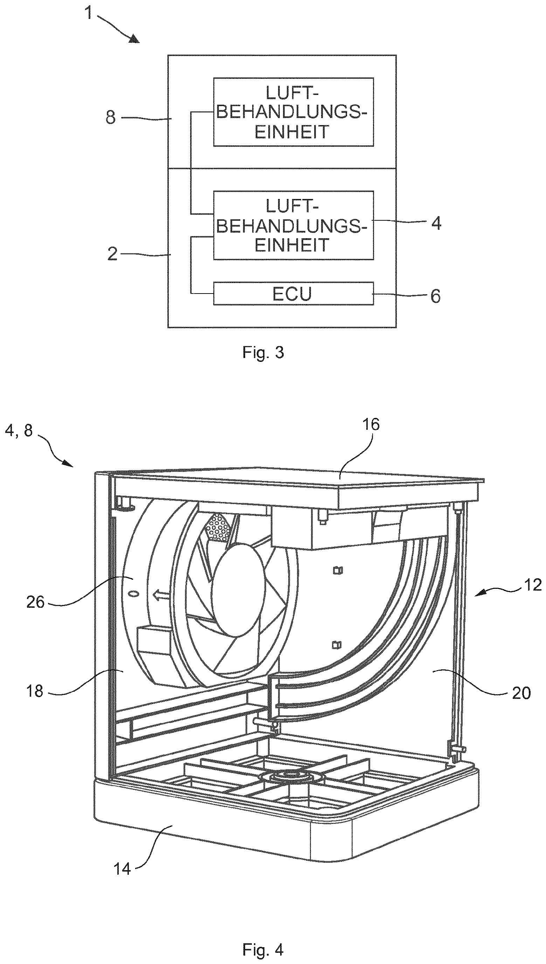

Fig. 3 ist hierfür eine Darstellung eines modifizierten Aufbaus des Raumluft-Behandlungssystems 1 nach dem ersten Ausführungsbeispiel. Das Raumluft-Behandlungssystem 1 weist dabei analog zu dem ersten Ausführungsbeispiel das Basismodul 2 mit der ersten Luftbehandlungseinheit 4 und der Steuereinrichtung 6 zur Steuerung der ersten Luftbehandlungseinheit 4 auf. Neben dem Basismodul 2 weist das Raumluft-Behandlungssystem 1 gemäß dem modifizierten ersten Ausführungsbeispiel die zumindest eine zweite Luftbehandlungseinheit 8 auf, welche mit dem Basismodul 2 gekoppelt werden kann.

In dem Raumluft-Behandlungssystem 1 gemäß dem modifizierten ersten Ausführungsbeispiel ist die Steuereinrichtung 6 des Basismoduls 2 eingerichtet, die erste Luftbehandlungseinheit 4 unmittelbar zu steuern. Des Weiteren ist die Steuereinrichtung 6 in dem Raumluft-Behandlungssystem 1 gemäß dem modifizierten ersten Ausführungsbeispiel eingerichtet, die zumindest eine zweite Luftbehandlungseinheit 8 mittelbar über die erste Luftbehandlungseinheit 4 zu steuern.

Fig. 4 ist eine beispielhafte Darstellung eines Aufbaus der ersten Luftbehandlungseinheit 4 und der zumindest einen zweiten Luftbehandlungseinheit 8. Nachstehend werden die erste Luftbehandlungseinheit 4 und die zumindest eine zweite Luftbehandlungseinheit 8 allgemein als "die Luftbehandlungseinheit" bezeichnet, wenn nicht explizit ein Unterschied zwischen der ersten Luftbehandlungseinheit 4 und der zumindest einen zweiten Luftbehandlungseinheit 8 vorliegt.

Fig. 5A und Fig. 5B sind perspektivische Ansichten der Luftbehandlungseinheit. Die Luftbehandlungseinheit beinhaltet dabei ein Gehäuse 12 mit einer quaderförmigen Bodenplatte 14, einer der Bodenplatte 14 in einer Höhenrichtung der Luftbehandlungseinheit gegenüberliegenden, quaderförmigen Deckenplatte 16 und vier sich senkrecht zwischen der Bodenplatte 14 und der Deckenplatte 16 erstreckenden Seitenwänden 18, 20, 22, 24 (Seitenwände 22, 24 in Fig. 3 nicht dargestellt). Die Bodenplatte 14, die Deckenplatte 16 und die vier senkrecht angeordneten Seitenwände 18, 20, 22, 24 bilden somit einen Hohlraum aus, in welchem eine Filtereinheit (in Fig. 3 nicht dargestellt) angeordnet ist. Die Filtereinheit ist dabei ein Beispiel für eine Luftbehandlungskomponente und die Bodenplatte 14 ein Beispiel für einen Steuersockel 10, in welchem die Steuereinrichtung 6 integriert ist.

Des Weiteren ist eine der vier Seitenwände 18, 20, 22, 24 luftdurchlässig ausgebildet und auf einer Innenseite der luftdurchlässigen Seitenwand ist ein Axiallüfter 26 vorgesehen, um Umgebungsluft von einer Außenseite der Luftbehandlungseinheit anzusaugen und so einen Lufteinlass auszubilden. Der Axiallüfter 26 ist hier ein Beispiel für das Lüfterrad der ersten Luftbehandlungseinheit 4 bzw. für das Lüfterrad der zumindest einen zweiten Luftbehandlungseinheit 8 und bietet in dem Raumluft-Behandlungssystem nach dem ersten Ausführungsbeispiel eine Luftleistung von 300 m³ pro Stunde. Alternativ dazu kann das Lüfterrad der ersten Luftbehandlungseinheit 4 und das Lüfterrad der zumindest einen zweiten Luftbehandlungseinheit 8 auch als Radiallüfter oder als eine andere Pumpenvorrichtung ausgeführt werden. Zumindest eine der drei weiteren Seitenwände 18, 20, 22, 24 ist ebenso luftdurchlässig gestaltet, um einen Luftauslass auszubilden, über welchen die angesaugte Luft wieder ausgeblasen wird.

Im Betrieb wird die Umgebungsluft von der Außenseite der Luftbehandlungseinheit über den Lufteinlass und den Axiallüfter 26 angesaugt und auf der Innenseite der Luftbehandlungseinheit der Filtereinheit zugeführt. Nach dem Durchströmen der Filtereinheit wird die gefilterte, angesaugte Luft, wie vorstehend beschrieben, über den Luftauslass wieder zu der Außenseite der Luftbehandlungseinheit ausgeblasen.

Die Filtereinheit als ein Beispiel der Luftbehandlungskomponente beinhaltet in dieser Ausführungsform einen Feinstaubfilter zur Filterung lungengängiger Feinstaubpartikel und/oder einen Aktivkohlefilter zur Reinigung der Luft von Gerüchen, chemischen Schadstoffen und Zigarettenrauch. Alternativ kann die Luftbehandlungskomponente auch Bauteile zur Befeuchtung der Umgebungsluft, zur Kühlung der Umgebungsluft, zur Erwärmung der Umgebungsluft oder eine Kombination aus den Bauteilen zur Filterung, zur Befeuchtung, zur Kühlung und zur Erwärmung der Umgebungsluft beinhalten.

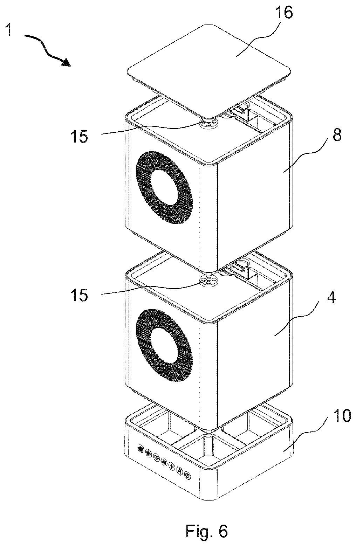

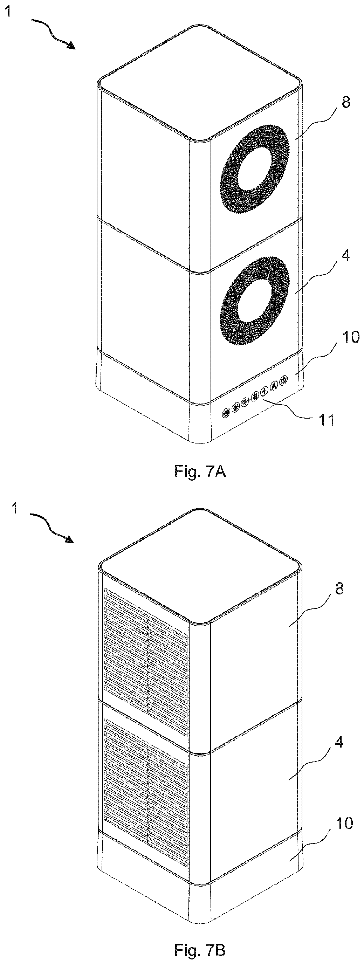

Fig. 6 ist eine Explosionszeichnung des Raumluft-Behandlungssystems 1 gemäß dem ersten Ausführungsbeispiel. Zusätzlich beinhaltet die erste Luftbehandlungseinheit 4 und die zumindest eine zweite Luftbehandlungseinheit 8 in dieser Ausführungsform jeweils zumindest ein (elektrisches) Kopplungselement 15 im Bereich der Deckenplatte 16 und zumindest ein (elektrisches) Kopplungselement 13 (nicht dargestellt in Fig. 7) im Bereich der Bodenplatte 14. In dieser Ausführungsform ist das zumindest eine Kopplungselement 15 im Bereich der Deckenplatte 16 der ersten Luftbehandlungseinheit 4 eingerichtet, mit dem zumindest einen Kopplungselement 13 in der Bodenplatte 14 der zweiten Luftbehandlungseinheit 8 in Verbindung zu stehen und die erste Luftbehandlungseinheit 4 und die zweite Luftbehandlungseinheit 8 elektrisch oder signaltechnisch miteinander zu koppeln.

Wie aus der Fig. 6 ersichtlich ist, befinden sich die Kopplungselemente 13 und 15 zentral und sind die elektrischen Kontakte so ausgebildet, dass die Luftbehandlungseinheiten 6 und 8 beliebig (in 90° Schritten) zueinander orientiert werden können.

Neben der elektrischen Kopplung über das Kopplungselement 13 im Bereich der Bodenplatte 14 und dem Kopplungselement 15 im Bereich der Deckenplatte 16 können die erste Luftbehandlungseinheit 4 und die zumindest eine zweite Luftbehandlungseinheit 8 sowie die erste Luftbehandlungseinheit 4 und der Steuersockel 10 jeweils über eine Passverbindung mechanisch miteinander in Verbindung stehen. An der Unterseite der zweiten Luftbehandlungseinheit 8 und an der Unterseite der ersten Luftbehandlungseinheit 4 ist eine umlaufende Kante ausgebildet, welche jeweils mit einer auf der Oberseite der ersten Luftbehandlungseinheit 4 und einer auf der Oberseite des Steuersockels 10 ausgebildeten umlaufenden Fassung im Eingriff steht und somit die Luftbehandlungseinheiten 4, 8 und den Steuersockel 10 zueinander ausrichtet und seitlich einfasst, so dass die übereinander gestapelten Luftbehandlungseinheiten 4, 8 bzw. Steuersockel nicht zu einander verrutschen. Auch die mechanische Kopplung (Formschluss) zwischen den Luftbehandlungseinheiten 4, 8 erlaubt beliebige Orientierungen.

Die Oberseite der obersten zweiten Luftbehandlungseinheit 8, auf die keine weitere Luftbehandlungseinheit 8 gesetzt werden soll, kann mit einer Deckenplatte oder einer Blende 16 verschlossen werden, um das Innenleben, insbesondere das elektrische Kopplungselement 15, zu verdecken.

Zur Erhöhung der Behandlungskapazität kann somit die zweite Luftbehandlungseinheit 8 über der ersten Luftbehandlungseinheit 4 in der Höhenrichtung gestapelt werden, wodurch die erste Luftbehandlungseinheit 4 und die zweite Luftbehandlungseinheit 8 in Verbindung mit dem Steuersockel 10 das Raumluft-Behandlungssystem 1 ausbilden.

Fig. 7A und Fig. 7B sind perspektivische Ansichten für den Fall, bei welchem eine zweite Luftbehandlungseinheit 8 über dem Basismodul 2 einschließlich der ersten Luftbehandlungseinheit 4 und dem Steuersockel 10 angeordnet ist und zusammen das Raumluft-Behandlungssystem 1 ausbilden.

Des Weiteren kann zusätzlich auch das zumindest eine Kopplungselement 15 an der Deckenplatte 16 der zweiten Luftbehandlungseinheit 8 mit dem zumindest einen Kopplungselement 13 an der Bodenplatte 14 einer weiteren zweiten Luftbehandlungseinheit 8 gekoppelt werden. Mit anderen Worten, zur weiteren Erhöhung der Behandlungskapazität können mehrere zweite Luftbehandlungseinheiten 8 über der ersten Luftbehandlungseinheit 4 in der Höhenrichtung übereinander angeordnet werden.

Wie bereits ausgeführt, sind die Kopplungselemente 15 an der Deckenplatte 16 und die Kopplungselemente 13 an der Bodenplatte 14 der Luftbehandlungseinheiten 4, 8 dabei symmetrisch angeordnet. Aufgrund der symmetrischen Anordnung der Kopplungselemente sowie der symmetrischen Gestaltung der Luftbehandlungseinheiten können die einzelnen Luftbehandlungseinheiten 4, 8, wenn diese übereinander angeordnet sind, um ihre Längsachse gedreht zueinander angeordnet werden. Mit anderen Worten, wenn die Kopplungselemente 13, 15 symmetrisch angeordnet sind und mehrere Luftbehandlungseinheiten übereinander gestapelt werden, können die Lufteinlässe bzw. die Luftauslässe der einzelnen Luftbehandlungseinheiten jeweils beispielsweise um 90°, 180° bzw. 270° zueinander gedreht sein und so die gefilterte Luft besser und gleichmäßiger im Raum verteilen.

Alternativ können Kopplungselemente jedoch auch an sich in einer Breitenrichtung der Luftbehandlungseinheit gegenüberliegenden Seitenwänden vorgesehen sein. Dabei steht das zumindest eine Kopplungselement an der Seitenwand der ersten Luftbehandlungseinheit 4 in Verbindung mit dem zumindest einen Kopplungselement an der Seitenwand der zweiten Luftbehandlungseinheit 8, wodurch die erste Luftbehandlungseinheit 4 und die zweite Luftbehandlungseinheit 8 in der Breitenrichtung mechanisch miteinander gekoppelt sind. Die erste Luftbehandlungseinheit 4 und die zweite Luftbehandlungseinheit 8 bilden somit das Raumluft-Behandlungssystem 1 aus.

Des Weiteren kann zusätzlich auch das zumindest eine Kopplungselement an der Seitenwand der zweiten Luftbehandlungseinheit 8 mit dem zumindest einen Kopplungselement an der Seitenwand einer weiteren zweiten Luftbehandlungseinheit 8 gekoppelt werden. Mit anderen Worten, zur weiteren Erhöhung der Behandlungskapazität können mehrere zweite Luftbehandlungseinheiten 8 neben der ersten Luftbehandlungseinheit 4 in der Breitenrichtung in einem gekoppelten Zustand angeordnet werden.

Sind die erste Luftbehandlungseinheit 4 und die zumindest eine zweite Luftbehandlungseinheit 8 sowie die zweiten Luftbehandlungseinheiten 8 untereinander miteinander elektrisch gekoppelt, so ist es möglich, dass die Kopplungspartner jeweils ohne physischen Kontakt Informationen austauschen.

### Zweites Ausführungsbeispiel

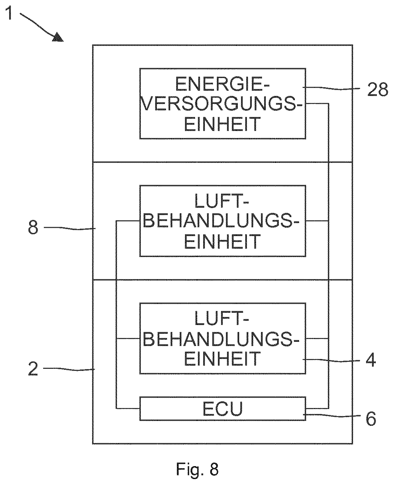

Fig. 8 ist eine schematische Darstellung eines Raumluft-Behandlungssystems 1 nach einem zweiten Ausführungsbeispiel. Das Raumluft-Behandlungssystem 1 nach dem zweiten Ausführungsbeispiel weist dabei ein Basismodul 2 mit einer ersten Luftbehandlungseinheit 4, zumindest eine zweite Luftbehandlungseinheit 8 und eine Energieversorgungseinheit 28 auf.

In dem Raumluft-Behandlungssystem 1 nach dem zweiten Ausführungsbeispiel weist das Basismodul 2, die erste Luftbehandlungseinheit 4 und/oder die zumindest eine zweite Luftbehandlungseinheit 8 an zumindest einer Außenseitenfläche eine Solarzelleneinheit auf. Die Solarzelleneinheit ist dabei eingerichtet, über ein Kopplungselement jeweils mit dem Basismodul 2, der ersten Luftbehandlungseinheit 4 und/oder der zumindest einen zweiten Luftbehandlungseinheit 8 koppelbar zu sein. Im gekoppelten Zustand versorgt die Solarzelleneinheit jeweils die mit der Solarzelleneinheit gekoppelte Luftbehandlungseinheit mit Energie.

Alternativ kann die Solarzelleneinheit auch eingerichtet sein, alle Einheiten des Raumluft-Behandlungssystems 1 nach dem zweiten Ausführungsbeispiel mit Energie zu versorgen. Mit anderen Worten, in dem Raumluft-Behandlungssystem 1 nach dem zweiten Ausführungsbeispiel ist die Solarzelleneinheit mit der ersten Luftbehandlungseinheit 4 oder mit einer der zumindest einen zweiten Luftbehandlungseinheiten 8 gekoppelt und versorgt über diese mit der Solarzelleneinheit gekoppelten Luftbehandlungseinheit die weiteren Luftbehandlungseinheiten, welche das Raumluft-Behandlungssystem 1 ausbilden, mit Energie.

In einem Fall, bei welchem zumindest eine zweite Luftbehandlungseinheit 8 über dem Basismodul 2 bzw. der ersten Luftbehandlungseinheit 4 angeordnet ist und die Solarzelleneinheit mit der obersten zweiten Luftbehandlungseinheit 8 gekoppelt ist, kann zusätzlich auch eine Oberseite der obersten zweiten Luftbehandlungseinheit 8 mit einer Solarzelleneinheit ausgestattet sein.

Die Solarzelleneinheit ist hier ein Beispiel für eine Energieversorgungseinheit 28. Alternativ können als Energieversorgungseinheit 46 auch mobile Energieträger, wie z.B. Batterien (Ni-Cd, Alkali-Mangan) oder Akkumulatoren (Lithium-Ionen), verwendet werden.

Die Erfindung gemäß der vorliegenden Offenbarung wurde anhand beispielhafter Ausführungsformen beschrieben, ist jedoch nicht darauf beschränkt. Weiterhin kann die Erfindung abgeändert und modifiziert werden ohne jedoch von dem Kern der Erfindung abzuweichen.

## Patentansprüche

1. Raumluft-Behandlungssystem (1) mit einem, vorzugsweise würfelförmigen, Basismodul (2), das eine erste Luftbehandlungseinheit (4) und eine Steuereinrichtung (6) zur Ansteuerung der ersten Luftbehandlungseinheit (4) aufweist;
zumindest einer, insbesondere würfelförmigen, zweiten Luftbehandlungseinheit (8); und
Kopplungselementen (13, 15) zur Kopplung des Basismoduls (2), insbesondere der ersten Luftbehandlungseinheit (4), mit der zumindest einen zweiten Luftbehandlungseinheit (8),
wobei die Steuereinrichtung (6) dazu eingerichtet ist, sowohl die erste Luftbehandlungseinheit (4) als auch die zumindest eine zweite Luftbehandlungseinheit (8) anzusteuern; **dadurch gekennzeichnet, dass**
die Kopplungselemente (13, 15) symmetrisch ausgeführt sind, um die einzelnen Luftbehandlungseinheiten (4, 8), wenn diese übereinander angeordnet sind, um ihre Längsachse gedreht zueinander anordnen zu können und die Ausrichtung der einzelnen Luftbehandlungseinheiten (4, 8) variieren zu können.

2. Raumluft-Behandlungssystem (1) nach Anspruch 1, **dadurch gekennzeichnet, dass** die Steuereinrichtung (6) die zumindest eine zweite Luftbehandlungseinheit (8) mittelbar über die erste Luftbehandlungseinheit (4) ansteuert.

3. Raumluft-Behandlungssystem (1) nach einem der Ansprüche 1 oder 2, wobei eine Behandlungskapazität des Raumluft-Behandlungssystems (1) über eine Anzahl der zweiten Luftbehandlungseinheiten (8) oder durch individuelle Ansteuerung der ersten Luftbehandlungseinheit (4) und der zumindest einen zweiten Luftbehandlungseinheit (8) einstellbar ist.

4. Raumluft-Behandlungssystem (1) nach einem der Ansprüche 1 bis 3, wobei die erste Luftbehandlungseinheit (4) und die zumindest eine zweite Luftbehandlungseinheit (8) zumindest eine Komponente zur Filterung, Kühlung und/oder Befeuchtung der Umgebungsluft beinhalten.

5. Raumluft-Behandlungssystem (1) nach einem der Ansprüche 1 bis 4, **dadurch gekennzeichnet, dass** die Steuereinrichtung (6) in die erste Luftbehandlungseinheit (4) integriert ist.

6. Raumluft-Behandlungssystem (1) nach einem der Ansprüche 1 bis 4, **dadurch gekennzeichnet, dass** die Steuereinrichtung (6) in eine mit der ersten Luftbehandlungseinheit (4) und/oder zweiten Luftbehandlungseinheit (8) koppelbaren separaten, insbesondere als Sockeleinheit (10) ausgebildeten, Steuereinheit integriert ist.

7. Raumluft-Behandlungssystem (1) nach einem der Ansprüche 1 bis 6, wobei sich die erste Luftbehandlungseinheit (4) und die zumindest eine zweite Luftbehandlungseinheit (8) mechanisch und/oder elektrisch miteinander koppeln lassen.

8. Raumluft-Behandlungssystem (1) nach einem der Ansprüche 1 bis 7, ferner mit einer, vorzugsweise würfelförmigen, Energieversorgungseinheit (28), welche mit dem Basismodul (2), der ersten Luftbehandlungseinheit (4) und/oder der zumindest einen zweiten Luftbehandlungseinheit (8) zur Energieversorgung einzelner oder aller Einheiten des Raumluft-Behandlungssystems (1) koppelbar ist.

9. Raumluft-Behandlungssystem (1) nach Anspruch 8, wobei die Energieversorgungseinheit (28) an zumindest einer Außenflächenseite, vorzugswiese an fünf Außenflächenseiten, eine oder mehrere Solarzellen aufweist.

10. Raumluft-Behandlungssystem (1) nach einem der Ansprüche 1 bis 7, wobei die Steuereinrichtung (6) durch manuelle Eingabe oder über ein externes Gerät über eine drahtlose Funkverbindung bedienbar ist.

## Claims

1. Room-air treatment system (1) having a, preferably cube-shaped, basic module (2) which has a first air-treatment unit (4) and a control device (6) for controlling the first air-treatment unit (4);
at least one, in particular cube-shaped, second air-treatment unit (8); and
coupling elements (13, 15) for coupling the basic module (2), in particular the first air-treatment unit (4), to the at least one second air-treatment unit (8),
wherein the control device (6) is configured to control both the first air-treatment unit (4) and the at least one second air-treatment unit (8); **characterised in that**
the coupling elements (13, 15) are symmetrically designed, in order to be able to arrange the individual air-treatment units (4, 8), when these are arranged above one another, so as to be twisted relative to one another about their longitudinal axis, and to be able to vary the alignment of the individual air-treatment units (4, 8).

2. Room-air treatment system (1) according to claim 1, **characterised in that** the control device (6) controls the at least one second air-treatment unit (8) indirectly via the first air-treatment unit (4).

3. Room-air treatment system (1) according to any of claims 1 or 2, wherein a treatment capacity of the room-air treatment system (1) is adjustable via a number of the second air-treatment units (8) or by individual controlling of the first air-treatment unit (4) and the at least one second air-treatment unit (8).

4. Room-air treatment system (1) according to any of claims 1 to 3, wherein the first air-treatment unit (4) and the at least one second air-treatment unit (8) include at least one component for filtering, cooling and/or humidifying the ambient air.

5. Room-air treatment system (1) according to any of claims 1 to 4, **characterised in that** the control device (6) is integrated into the first air-treatment unit (4).

6. Room-air treatment system (1) according to any of claims 1 to 4, **characterised in that** the control device (6) is integrated into a separate control unit, in particular in the form of a control socket unit (10), able to be coupled to the first air-treatment unit (4) and/or second air-treatment unit (8).

7. Room-air treatment system (1) according to any of claims 1 to 6, wherein the first air-treatment unit (4) and the at least one second air-treatment unit (8) can be coupled mechanically and/or electrically to one another.

8. Room-air treatment system (1) according to any of claims 1 to 7, furthermore having a preferably cube-shaped power supply unit (28) which can be coupled to the basic module (2), the first air-treatment unit (4) and/or the at least one second air-treatment unit (8) for supplying power to individual or all units of the room-air treatment system (1).

9. Room-air treatment system (1) according to claim 8, wherein the power supply unit (28) comprises one or more solar cells on at least one outer surface side, preferably on five outer surface sides.

10. Room-air treatment system (1) according to any of claims 1 to 7, wherein the control device (6) is operable by manual input or via an external device via a wireless radio link.

## Revendications

1. Système de traitement de l'air ambiant (1) avec un module de base (2), de préférence en forme de cube, qui présente une première unité de traitement d'air (4) et un dispositif de commande (6) pour la commande de la première unité de traitement d'air (4) ;
au moins une seconde unité de traitement d'air (8), en particulier en forme de cube ; et
des éléments de couplage (13, 15) pour coupler le module de base (2), en particulier la première unité de traitement d'air (4), à la au moins une seconde unité de traitement d'air (8),
dans lequel le dispositif de commande (6) est adapté pour commander à la fois la première unité de traitement d'air (4) et la au moins une seconde unité de traitement d'air (8) ; **caractérisé en ce que**
les éléments de couplage (13, 15) sont réalisés de manière symétrique afin de pouvoir agencer les différentes unités de traitement d'air (4, 8), lorsque celles-ci sont agencées les unes au-dessus des autres, en les faisant tourner les unes par rapport aux autres autour de leur axe longitudinal et de pouvoir faire varier l'orientation des différentes unités de traitement d'air (4, 8).

2. Système de traitement de l'air ambiant (1) selon la revendication 1, **caractérisé en ce que** le dispositif de commande (6) commande la au moins une seconde unité de traitement d'air (8) indirectement par l'intermédiaire de la première unité de traitement d'air (4).

3. Système de traitement de l'air ambiant (1) selon l'une quelconque des revendications 1 ou 2, dans lequel une capacité de traitement du système de traitement de l'air ambiant (1) est réglable par l'intermédiaire d'un nombre des secondes unités de traitement d'air (8) ou par commande individuelle de la première unité de traitement d'air (4) et de la au moins une seconde unité de traitement d'air (8).

4. Système de traitement de l'air ambiant (1) selon l'une quelconque des revendications 1 à 3, dans lequel la première unité de traitement d'air (4) et la au moins une seconde unité de traitement d'air (8) contiennent au moins un composant pour filtrer, refroidir et/ou humidifier l'air ambiant.

5. Système de traitement de l'air ambiant (1) selon l'une quelconque des revendications 1 à 4, **caractérisé en ce que** le dispositif de commande (6) est intégré dans la première unité de traitement d'air (4).

6. Système de traitement de l'air ambiant (1) selon l'une quelconque des revendications 1 à 4, **caractérisé en ce que** le dispositif de commande (6) est intégré dans une unité de commande séparée pouvant être couplée à la première unité de traitement d'air (4) et/ou à la seconde unité de traitement d'air (8), en particulier réalisée sous la forme d'une unité de socle (10).

7. Système de traitement de l'air ambiant (1) selon l'une quelconque des revendications 1 à 6, dans lequel la première unité de traitement d'air (4) et la au moins une seconde unité de traitement d'air (8) peuvent être couplées mécaniquement et/ou électriquement entre elles.

8. Système de traitement de l'air ambiant (1) selon l'une quelconque des revendications 1 à 7, avec en outre une unité d'alimentation en énergie (28), de préférence en forme de cube, qui peut être couplée au module de base (2), à la première unité de traitement d'air (4) et/ou à la au moins une seconde unité de traitement d'air (8) pour l'alimentation en énergie de certaines ou de toutes les unités du système de traitement de l'air ambiant (1).

9. Système de traitement de l'air ambiant (1) selon la revendication 8, dans lequel l'unité d'alimentation en énergie (28) présente une ou plusieurs cellules solaires sur au moins un côté de surface extérieure, de préférence sur cinq côtés de surface extérieure.

10. Système de traitement de l'air ambiant (1) selon l'une quelconque des revendications 1 à 7, dans lequel le dispositif de commande (6) peut être commandé par saisie manuelle ou par un appareil externe via une liaison radio sans fil.
